# EUROPEAN PATENT SPECIFICATION

(11) **EP 0 393 913 B1**
(45) Date of publication and mention of the grant of the patent: **23.08.1995**
(21) Application number: 90303861.0
(22) Date of filing: 10.04.1990
(51) Int. Cl.: H04M 1/00, H04M 11/06, H04Q 11/04

(54) **Digital telephone system**
Digitales Telefonsystem
Système téléphonique numérique

(30) Priority: 15.04.1989 GB 8908590
(43) Date of publication of application: 24.10.1990
(73) Proprietor: XKF DEVELOPMENTS LIMITED, Leamington Spa, Warwickshire CV32 5NW (GB)
(72) Inventor: Ellis, Christopher William Henderson, Leamington Spa CV32 5NW (GB)
(74) Representative: Cowan, David Robert

(56) References cited:
- BE-A- 905 259
- PATENT ABSTRACTS OF JAPAN, vol. 11, no. 117 (E-498)[2564], 11th April 1987;& JP-A-61 264 935 (FUJITSU LTD) 22-11-1986
- IEEE TRANSACTIONS ON COMMUNICATIONS, vol. COM-31, no. 6, June 1983, pages 799-803, IEEE, New York, US; M. YOKOYAMA et al.: "A multi-bit-rate substitute-communication system with high call-carrying capacity"
- ELECTRICAL COMMUNICATION, vol. 58, no. 2, 1983, pages 200-205, Heidenheim, DE; D. ANDERSEN et al.: "Digital subset for the ITT5300 business communication system"
- IEEE JOURNAL ON SELECTED AREAS IN COMMUNICATIONS, vol. SAC-4, no. 8, November 1986, pages 1193-1201, IEEE, New York, US; S. OHKOSHI et al.: "A digital telephone set for ISDN"

## Description

This invention relates to digital telephone systems and in particular to systems having means for converting analogue speech signals to digital signals for transmission over a digital communications network and for converting digital signals received from said network to analogue speech signals.

Digital telephone systems are being implemented among privately operated networks and also amongst public telephone networks. Integrated Services Digital Networks (ISDN) are also being deployed. A basic channel capacity of 64 Kbits per second has been adopted and 64 Kbits/sec pulse coded modulation (PCM) has been chosen for speech encoding by international agreement. In addition the CCITT STANDARD G721 for 32 Kbit/sec adaptive differential pulse coded modulation (ADPCM) is already in use for long distance and international links and will soon be used in volume for the next generation of cordless telephones. The planned pan-European digital cellular telephone service will use 16 Kbit/sec (GSM). There is also a CCITT standard (G722) for 64 Kbits/sec ADPCM currently used in digital audio-conferencing applications. A number of manufacturers have demonstrated experimental digital telephone sets running at 64 Kbit/sec with ADPCM encoding. These sets provide a level of audio quality well above the standard of the best of today's 64 Kbit/sec PCM sets.

A major problem in designing and running a telecommunications network is to provide sufficient capacity in the network to deal with the peaks in demand without expensive overprovision. An acceptable level of service is also needed even when one or more links in the network are out of action. Conventionally a digital telephone at an input/output location includes a speech encoding and decoding integrated circuit (commonly known as a codec) which implements a single coding algorithm which is at a fixed bit rate. By far the most common uses a pulse code modulation (PCM) algorithm running at 64 Kbit/sec.

It has been proposed to have a telephone set which has the facility to handle voice transmissions at a fixed bit rate typically 64 Kbit/sec. and non voice transmission at the same or a different bit rate from the voice bit rate so that the user can use speech at the same time as transmitting data.

It has been proposed to provide a digital telephone system having individual telephone sets with means for converting speech signals to analogue speech signals, means for converting said analogue speech signals to digital signals for transmission over a digital communications network, and means for converting said digital signals received from said digital communication network to analogue speech signals, wherein conversion between analogue speech signals and digital signals takes place at said individual telephone sets receiving said speech signals.

Moreover proposals have been made for accommodating the bit rate to the usage of the network. For example Patent Abstracts of Japan Vol. 11, No. 117 describes how traffic can be diverted via a low bit rate codec and then fed back into the network.

IEEE Transactions on Communication, Vol COM-31 describes a multi bit rate substitution communication system in which traffic is supported at 64 kbps. If less than 64 kbps is available the user must make use of multi-function terminals "telewriting communication" facility.

IEEE Journal on Selected Areas in Communications discloses the functions of an early form of ISDN telephone set. A telephone with only one codec is envisaged.

An object of the present invention is to provide for increased usage of telephone networks with a limited capacity.

According to one aspect of the invention a method of selecting the bit rate of the digital telephone system is characterised in that in said individual telephone sets analogue signals are converted to said digital signals at one of at least two different bit rates, one of said bit rates being a standard bit rate and at least one of the other bit rates being a reduced bit rate, and in that control signals are generated according to a usage rate of said digital communications network and such control signals are able to select one of said at least two bit rates produced by said individual telephone sets at the initiation of a call at said individual telephone set, whereby said standard bit rate is selected when said usage of said communication network is below a predetermined percentage of usage and said at least one other reduced bit rate of said at least two bit rates is selected upon increasing usage of said communication network above said predetermined percentage in order to accommodate such increased usage.

Upon receiving a control signal or signals the bit rate is reduced to 32 Kbits/sec, 16 Kbits/sec, 8 Kbits/sec or lower when increased usage takes place, or the bit rate is increased from these bit rates where reduced usage of the network takes place.

There may be provided at the telephone sets two or more codec circuits each of which is selectively connectable to encode speech signals to digital signals but at different bit rates, the control signals selecting the codec circuit to be utilised.

Conveniently at selected input/outlet locations there is provided means for overriding the control signals whereby the selected bit rate is maintained irrespective of usage rate.

The control signal may be generated by a network management system to optimise the usage of the telephone system during high usage periods.

According to another aspect of this invention a digital telephone system for carrying out the method of the invention is characterised by signal generating means for generating control signals according to a usage rate of said network, said first conversion means being selectively operable in response to said control signals to convert said analogue signals into digital signals having one of at least two bit rates and said control signals being transmitted to said second conversion means to enable said second conversion means to selectively operate at one of said bit rates which is selected according to said usage rate of said telephone network, said first conversion means including at least two circuits each of which is selectively connectable to encode said analogue speech signals to said digital signals but at different bit rates, said control signals selecting the circuit to be utilized.

Preferably the circuit selected is capable of maintaining the bit rate during the course of a call from the associated telephone set.

Conveniently at a selected telephone set there is provided means for overriding the control signals whereby the selected bit rate is maintained irrespective of usage rate.

A digital telephone system in accordance with the present invention will now be described by way of example with reference to the accompanying drawings, in which:
Figure 1 shows schematically part of a telephone set at one station of a system,
Figure 2 shows part of a telephone set incorporating the invention,
Figs. 3A, 3B and 3C show schematically examples of telephone networks in which the invention can be used,
Figure 4 shows a typical daily traffic pattern for a multi-channel digital link, and
Figure 5 shows the improvement in traffic capacity achieved by implementing the invention, K indicating, in Figs 4 and 5, "Kbits/sec".

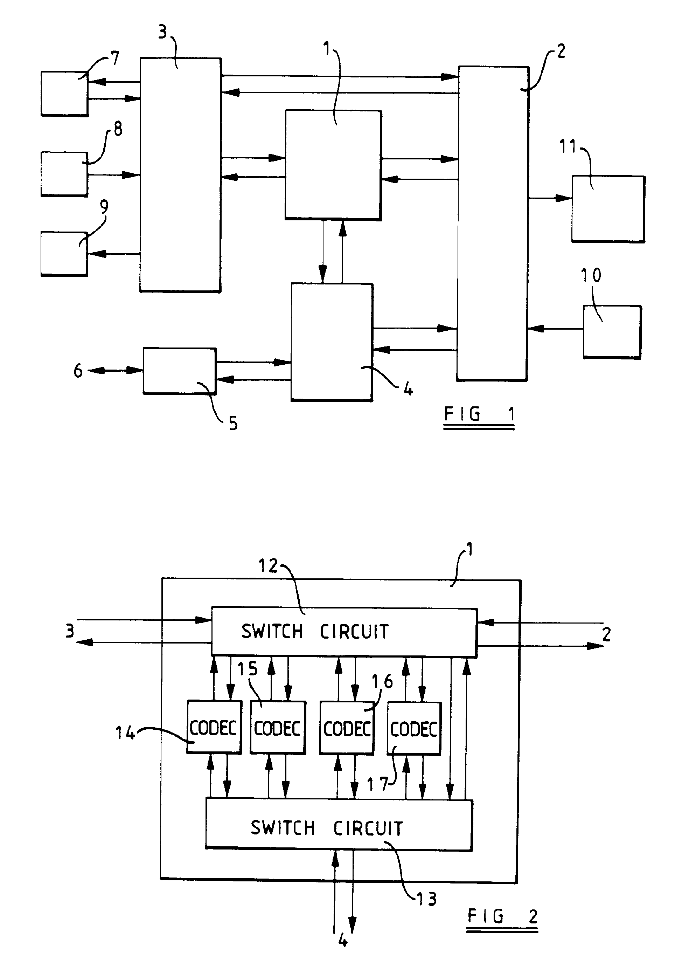

Referring first to Figure 1 subscriber's equipment X (telephone set) for connection to an exchange (not shown) of a digital telephone network comprises speech encoding and decoding circuitry 1 controlled by a microcontroller 2, which also controls an analogue integrated circuit 3 and a digital transmission integrated circuit 4. The latter is connected to a digital line interface 5 which in turn connects the digital telephone to a telephone line 6 leading to the associated PBX, key system, digital local exchange or central office. The analogue integrated circuit 3 is connected to a handset 7 and, when fitted, a handsfree microphone 8 and speaker 9. The microcontroller 2 is also connected to a key pad 10 and may also be connected to a display 11.

Figure 1 shows the major elements of a typical conventional digital telephone set X. In some of the more advanced implementations, the functions of the codec circuit 1, the analogue integrated circuit 3 and the digital transmission integrated circuit 4 may be integrated into a single chip.

Referring now to Figure 2, there is shown modified circuitry 1 used in the implementation of the invention. The microprocessor 2 controls a switch circuit 12 and another switch circuit 13, and determines which of four codecs 14, 15, 16 or 17 will be connected to the analogue circuit 3 and the digital transmission circuit 4. In this particular embodiment, the codec circuit 14 provides 64 Kbit/sec PCM speech encoding and decoding, the codec circuit 15 provides 64 Kbit/sec ADPCM speech encoding and decoding, the circuit 16 provides 32 Kbit/sec ADPCM speech encoding and decoding, and the circuit 17 provides 16 Kbit/sec ADPCM or GSM speech encoding and decoding. In another arrangement a different set of algorithms may be provided, perhaps using a single integrated circuit. At any instant, only one of the codec circuits 14, 15, 16 or 17 is connected to the analogue circuit 3 and the digital transmission circuit 4, so that, at any instant, only one particular bit rate is being supported. The appropriate bit rate is set up at the start of the call, and usually, but not necessarily, remains fixed for the duration of the call. The algorithm/bit rate chosen is determined by a signal which is determined by a combination of the logic in the telephone microprocessor 2, the processor(s) of the exchange(s) to which the telephone is attached and the network management system, as selected. The signal providing the choice of bit rate may depend on a combination of any caller preferences indicated via the key pad 10 or the touch sensitive display 11, the class of service of the caller, the network loading, the time of day, the capabilities of the called party's telephone and whether the call is totally within a private network or set of private networks or uses one or more public networks, but not exclusively on these factors.

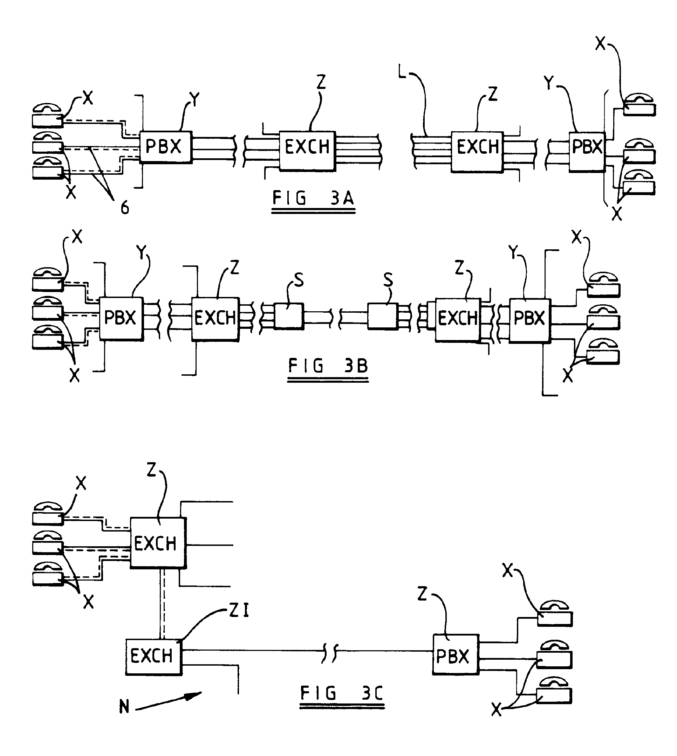

Figs. 3A, 3B and 3C show the use of telephone sets X in various kinds of telephone network.

In Fig. 3A the telephone sets incorporating the invention are linked through the network to PBX units Y which in turn are each linked to a local telephone exchange Z. A plurality of telephone sets are connected to each PBX (although only three are shown) and the exchanges Z transmit the calls between each other over public or private transmission lines L. If the total traffic over the lines L exceeds or falls below a predetermined level, i.e. if the network loading is in excess of or less than a certain level, network management software associated with the PBXs set flags in the routing tables associated with the lines L. Then, when a user subsequently starts to make a call over the lines L, the control software in each PBX will check the routing tables during call set-up and send a control signal to each telephone to actuate the switch circuits 12 and 13 in the telephone sets and thereby cause the switches to select another of the codecs 14, 15, 16 or 17 (Fig. 2) in the telephone set X. Thus if the user, subsequent to said switching, continues a call on such a telephone set the bit rate of the call will be in accordance with the codec which has been selected unless the particular set has been arranged to operate only at a preselected, usually 64 Kbit/sec, bit rate.

By the variation in the bit rate set by the codecs in the telephone set the capacity of the network is changed to allow more calls to pass through the network than if the telephone sets only operated at a fixed, usually 64 Kbit/sec, rate.

Similarly, referring to Fig. 3B the invention may be employed in a call set up which involved crossing national and international networks in which the transmission between exchanges involves different encoding arrangements involving gateway switches S. In other respects such a network is capable of operating as for the Fig. 3A example if the calling and called sets are in accordance with the invention.

In the arrangement of Fig. 3C individual telephone sets X,. not passing through a PBX system, can utilise the invention. The calls, after passing to a local exchange Z, are directed to a private long distance network N having an exchange Z1 with a network management system. Network loading signals are transmitted back to the telephone sets to vary the selected bit rate at which the digital signals are transmitted from the set. Thus the capacity of the private network may be increased by the reduction in the bit rate of the calls through the network.

To illustrate how the bit rate is selected in a particular implementation, consider the following example of a PBX with a mixture of variable bit rate and conventional telephones attached, which is connected via a 2 megabit leased circuit to a similar PBX some 200 kilometres distant, for example according to the Fig. 3A arrangement.

In the case of calls from one extension to another on the same PBX, there are four conditions. The first is that a conventional telephone set is calling another conventional set, and the call is set up in the conventional way. The second is where a conventional set is calling a variable bit rate telephone set. In the latter arrangement, the default setting for a variable bit rate telephone at call setup is always 64 Kbit/sec PCM. When the call is initiated from a conventional telephone to a variable bit rate telephone, the setting in the variable bit rate telephone remains at 64 Kbit/sec PCM for the duration of the call. Similarly in the third case when a variable bit rate telephone calls a local extension with a conventional telephone, the default setting obtains throughout the call. In the fourth case, when two variable bit rate telephones are connected, the PBX uses the signalling channel, which may be proprietary or the ISDN D channel, to reset the two variable bit rate telephones to 64 Kbit/sec ADPCM. If the two variable bit rate telephones also have an appropriate data option, with, for example, a personal computer attached to each one, then a data call can be initiated via the D channel or its equivalent from one of the personal computers, and the two variable bit rate telephones will reset to 32 or 16 Kbit/sec, allowing the remaining 32 or 48 Kbit/sec of the 64 Kbit/sec circuit through the PBX to be used for data communication between the two personal computers. At the end of the computer to computer transmission, a signal from the initiating personal computer can cause the two variable bit rate telephones to reset to 64 Kbit/sec ADPCM.

If a call is being made directly to a public network, the call will be set up at 64 Kbit/sec with PCM encoding, both in the case of a variable bit rate telephone and a conventional telephone. If a call is made from an extension on one PBX to an extension on another PBX, there are, once again, four possibilities. If a conventional telephone calls a conventional telephone, the call is set up at the conventional rate of 64 Kbit/sec, with PCM encoding. The same is the case when a conventional telephone calls a variable bit rate telephone, or vice versa. When, however, two variable bit rate telephones are connected, the PBX will reset them to run at one of the three other rates, i.e. 16, 32, or 64 Kbit/sec ADPCM. The rate will depend on the loading on the 2 megabit link between the two PBXs. It is a simple matter to keep a count within the PBXs of the active channels in each 2 megabit link. If less than, say, 20 of 32 channels are active then the new call will be set up at 64 Kbit/sec ADPCM. If there are, say, 20 or more but less than 26 then the new call will be set up as 32 Kbit/sec ADPCM. If 26 or more channels are active, new calls are set up at 16 Kbit/sec. The exception is when either of the two parties is entered in the appropriate table in one or other of the PBXs as being assured of 64 Kbit.sec capacity for all calls. This condition can be set on a per call basis for those variable bit rate telephones equipped with an appropriate button or switch, so that full audio conferencing quality can be sustained even when the transmission links are heavily loaded.

The button is pressed at the beginning of each call before dialing the number. When it has been pressed, a signal is sent over the D channel or its equivalent which temporarily sets a flag in the appropriate extension table in the PBX.

For calls into the public networks extended across the private network from a variable bit rate telephone, the call can be carried across the network at 32 Kbit/sec or 16 Kbit/sec, depending on the Network Code of Practice in each country for the implementation of private networks.

A consideration in setting up an external call to run across the network at a reduced bit rate will be the availability of the node that interfaces to the public network of ports which can convert to/from the 64 Kbit/sec PCM implementation in the public network from/to the reduced bit rate in the private network. Because of the relatively poor quality of the circuit comprising the majority of the public network, there is no point in carrying traffic across the network at 64 Kbit/sec PCM if a lower bit rate can be used. However, if no conversion ports are available, then, capacity permitting, 64 Kbit/sec PCM can be used right across the network.

In the case of extension-to-extension calls passing through multiple PBXs and multiple links, the call setup process will check whether any of the links are heavily loaded and set the bit rate for the call appropriately.

It is clear from the above that the most economical situation in terms of transmission costs is when all the telephones on the private network are variable bit rate telephones. However, if the majority of long distance calls are made by a small proportion of users, then it is only necessary to equip those users with variable bit rate telephones to achieve major savings, at low cost.

In the latter arrangement, each PBX is linked by multiple 64K bit/sec leased lines. Each line is terminated in the PBX at each end by a special digital trunk interface card. Each card has groups of four 64Kbit/sec ports on the matrix side. If a 64Kbit/sec call to the other PBX is assigned to the first port in a group, the other ports are set as busy. If a 16Kbit/sec call is assigned to the first port, the other 3 ports are set as busy for 64Kbit/sec calls, but are still available for 16Kbit/sec calls. The third port is also available for a 32Kbit/sec call. Also on the card is the function which strips the padding bits added by the variable bit rate telephone to the 16Kbit/sec or 32Kbit/sec voice stream to build up to the PBX channel capacity of 64Kbit/sec, as well as the simple multiplexing function that combines the 16Kbit/sec and 32Kbit/sec streams into one 64Kbit/sec stream.

If a 64Kbit/sec call is assigned to the first port, the bit stripping and multiplexing functions are bypassed.

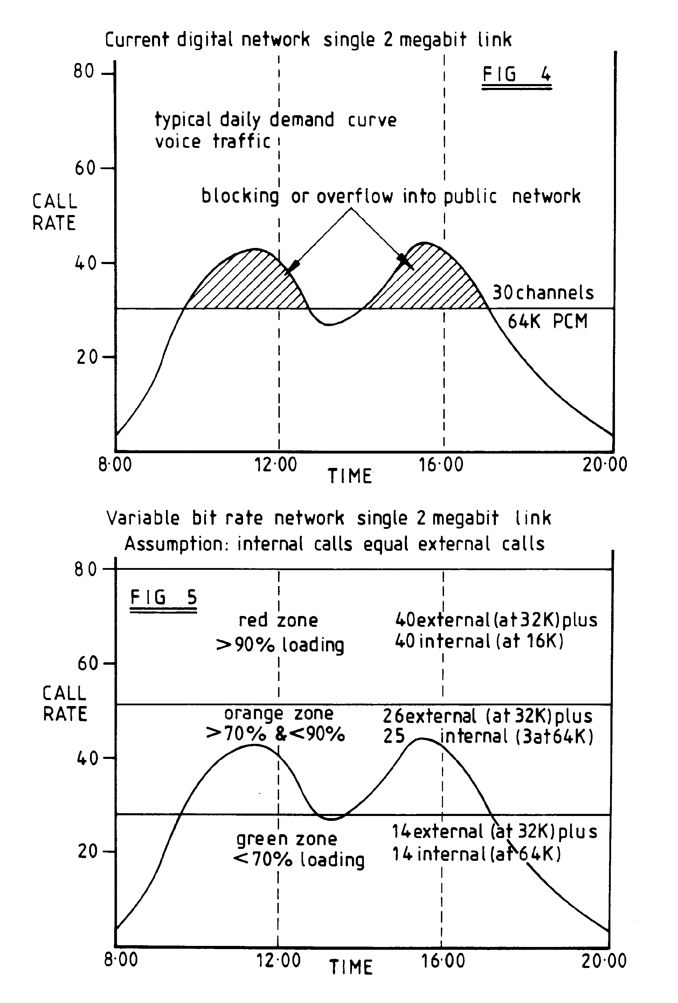

Referring now to Figure 4, a typical daily call pattern is shown for traffic over a 2 Megabit link of a private telecommunications network, before the implementation of the invention. During peak times, either some calls cannot be made or they are made, but at much greater cost over the public network.

Referring now to Figure 5, the principal advantage of implementing the invention is shown. Under heavy loading, caused by abnormal traffic demands or the failure of another link in the system, the capacity of the link has increased as much as fourfold, if all the calls are internal to the private network and can run at 16 Kbit/sec. In the specific example illustrated, it is assumed that half the calls are internal. All internal voice calls carried entirely within a private network, or over two or more linked private networks, now run outside peak times at 64 Kbit/sec ADPCM, providing the benefit of much enhanced audio quality. This is the case when all links necessary for a particular call are in "condition green", with, say, less than 70% loading. When any link is at "condition orange", say, 70% to 90%, then the control signal ensures that all new calls are set up at 32 Kbit/sec, unless the caller has the highest class of service. If this is the case, the call still goes through at 64 Kbit/sec. If "condition red" occurs on any link, the control signal selects the codecs to cause all calls to run at 16 Kbit/sec. The points at which the network goes from "condition green" to "condition orange" and from "condition orange" to "condition red" can be set by the network controller in the exchanges or in the network management system.

The net result of this is a network which appears almost non-blocking. If the network is under stress because of an abnormally high traffic peak or a link failure that causes the other link(s) to become overloaded, calls still continue to go through, but at reduced audio quality.

It should be emphasised that 32 Kbit/sec ADPCM is a match for 64 Kbit/sec PCM in terms of perceived quality. Consequently, calls running in "condition orange" are as high in audio quality as those that are running on ordinary 64 Kbit/sec PCM, but the network can carry many more calls. However, that is not the limit of the system's capacity. Consider a large PBX installation that usually has a private traffic peak load requiring some 70 external channels.

This is catered for by two 2-megabit links, one from one public telecommunications operator, the other from an alternative supplier, in order to provide backup in case of failure. At peak load, some 10 conversations must be carried by the public switched networks, as overflow. Assume that the PBX is now enhanced by the installation of the invention. The peak capacity, without quality degradation, doubles to 120 channels, and, with some degradation in audio quality, can go much higher. In extremis, if one of the links is down, the capacity without degradation is still 60 channels. Even with one link down, if traffic demand rises above 60 simultaneous calls the network can still avoid expensive use of the public networks by reducing the bit rate of at least some internal calls to 16 Kbit/sec. When full network capacity is restored, users will again enjoy 64Kbit/sec ADPCM quality on internal calls during most of the day.

Calls extended to or from the public networks across a private network are converted to or from the public standard of 64 Kbit/sec PCM at the network boundary to or from ADPCM, unless the public network also supports ADPCM. There is quantizing distortion in the conversion, but this is usually well within the limits imposed by the Network Codes of Practice. There is no point in extending external PCM calls internally at 64 Kbit/sec ADPCM, because the quality is fundamentally limited by the PCM and analogue implementation in public networks.

Local calls to or from the public network(s) use 64 Kbit/sec PCM, unless the public telephone operator's local exchange is capable of accepting ADPCM, in which case the subscriber will choose between higher audio quality or lower call charges, depending also on the capabilities of the called party's telephone.

There is an important additional benefit for international callers. Increasingly, it will be possible to extend international calls directly through the other country's gateway switch, using 32 Kbit/sec ADPCM. This will not only save on network costs but will result in a significant improvement in quality, particularly in the case of links between Mu law PCM and A law PCM countries, because calls will not need Mu law/A law conversions, going straight from/to ADPCM.

The use of a bandwidth manager providing digital voice compression on each link of a private network could achieve some of the benefits of the present invention approach, but only some. Using the present invention provides enhanced audio quality for most calls, something a bandwidth manager inherently cannot do. The present invention avoids a transformation to 32 Kbit/sec from 64 Kbit/sec for private network calls, except when the network is under heavy load. The bandwidth controller always carries out a transformation, twice, which gives a quantizing distortion of some 2.5 units. This is usually acceptable for private network calls but is usually the absolute total limit for calls to or from the digital PSTN. Consequently it may not be permissable to extend an external call over multiple, bandwidth manager-compressed links, limiting the topology of the network and increasing its cost. Above all, it would be difficult to obtain approval for a bandwidth manager providing multiple drops from 64 Kbit/sec to 16 Kbit/sec. The level of distorsion would, almost certainly, be unacceptable to users, leave alone the regulatory authorities. On the other hand, because the present invention encodes at source at the telephone set, its perceived, and measured, quality is much better, and certainly acceptable in a situation of network stress, particularly when balanced against the general norm of superior audio quality. In summary, the present invention enhances and sustains audio quality where the bandwidth manager usually degrades quality, and the present invention is capable of producing significantly greater network cost savings. The bandwidth manager approach inherently reduces the reliability of a- network, whereas the present invention's approach has no adverse effect on reliability and enhances network availability because of its 16 Kbit/sec capability.

The present invention provides benefits for all location sizes, not just large sites. Small sites can gain similar advantages, using Basic Rate connections through ISDN. A single Basic Rate connection could support at least eight private network calls, wherever the public telephone operators provide Virtual Private Networking as an adjunct to Basic Rate ISDN.

There is even merit in using the present invention for domestic ISDN Basic Rate telephone users. The local public telephone operating companies could find this the key application which accelerates the domestic take-up of ISDN Basic Rate and provides them with an additional source of revenue. The present invention gives the user two major benefits over ordinary telephone service or basic ISDN. First, within the community of other subscribers, a major improvement in audio quality results.

More importantly, the local operating company will be able to offer access, at 32 Kbit/sec or less, to the long distance networks, which will offer reduced long-distance charges for such calls.

For example, in the United States a Bell Operating Company might offer a premium local ISDN Basic Rate service using the present invention. The local exchange would determine whether the called party was also equipped with the present invention and was within the same Local Access Telephone Area. If so, both sets would be instructed to use their 64 Kbit/sec ADPCM capability, and the call would be conducted with high audio quality. If the called party only had a conventional analogue or digital set, the calling party's set according to the invention would be. instructed over the ISDN signalling channel to use its 64 Kbit/sec PCM capability. If the call was long distance and the caller was a subscriber to an appropriate long distance service, the local exchange would instruct the caller's set to run at 32 Kbit/sec, or less. At the other end of the long distance link the call would normally be converted to 64 Kbit/sec PCM for transmission to the called party's local exchange, unless the called party also had a set according to the invention in which case that set would also be instructed to run at 32 Kbit/sec or less. A further facility in the case where both parties to a long distance call are using the invention would be to offer the calling party the choice of running the call at 64 Kbit/sec ADPCM, for an additional charge. In Europe, the public telephone operators may choose to offer a similar service.

A typical conventional digital voice compression bandwidth manager currently does two things. It converts the 64Kbit/sec PCM streams coming from the switches to/from 32K ADPCM, and it multiplexes the 32Kbit/sec streams to/from 64Kbit/sec channels. With a private network according to the invention the two functions need to be separated. Within the private network itself, only the multiplexing function is required, not the 64Kbit/sec to 32Kbit/sec conversion. At the network boundary, only the conversion function is required. The PBX customer will be offered enhanced versions of the ISDN interfaces, which will optionally carry out bit rate conversions. On the private links, only very simple, low-cost, multiplexers are needed which, under switch control, deal with 64, 32 and 16 Kbit/sec streams, all flowing from/to multiple 64Kbit/sec channels. It should be emphasised that there are no significant changes required of the switches themselves. They will continue to switch 64Kbit/sec streams. These streams will be padded out when handling low bit-rate voice traffic. The padding stripping function will be part of the multiplexer functional set.

Additional software in the switches will be necessary, to manage and co-ordinate the multiplexers and control the bit rates used by the sets adopting the invention.

## Claims

1. A method of selecting the bit rate of a digital telephone system having individual telephone sets (X) with means (1) for converting speech signals to analogue speech signals, means (14, 15, 16, 17) for converting said analogue speech signals to digital signals for transmission over a digital communications network, and means (1) for converting said digital signals received from said digital communications network to analogue speech signals, wherein conversion between analogue speech signals and digital signals takes place at said individual telephone sets (X) receiving said speech signals, characterised in that in said individual telephone sets (X) analogue signals are converted to said digital signals at one of at least two different bit rates, one of said bit rates being a standard bit rate and at least one of the other bit rates being a reduced bit rate, and in that control signals are generated according to a usage rate of said digital communications network and such control signals are able to select one of said at least two bit rates produced by said individual telephone sets at the initiation of a call at said individual telephone set, whereby said standard bit rate is selected when said usage of said communication network is below a predetermined percentage of usage and said at least one other reduced bit rate of said at least two bit rates is selected upon increasing usage of said communication network above said predetermined percentage in order to accommodate such increased usage.

2. A method according to claim 1 wherein the selected bit rate is maintainable during the course of said call at said individual telephone set (X).

3. A method according to Claim 1 or 2 wherein the standard bit rate of the digital signals is 64 Kbits/sec and upon receiving a control signal or signals the bit rate is reduced to 32 Kbits/sec, 16 Kbit/sec, 8 Kbits/sec or lower when increased usage takes place, or the bit rate is increased from these bit rates where reduced usage of the network takes place.

4. A method according to Claim 1, 2 or 3 wherein there is provided at the telephone sets two or more codec circuits each of which is selectively connectable to encode speech signals to digital signals but at different bit rates, the control signals selecting the codec circuit to be utilised.

5. A method according to any one of Claims 1-4 wherein at a selected telephone set (X) there is provided means for overriding the control signals whereby the selected bit rate is maintained irrespective of usage rate.

6. A method according to any one of the preceding claims wherein the control signal is generated by a network management system to optimise the usage of the telephone system during high usage periods.

7. A digital telephone system comprising telephone sets (X) for receiving speech signals to generate analogue speech signals, first conversion means (1) at said telephone sets for converting said analogue speech signals to digital signals, a digital communications telephone network over which said digital signals are transmitted, and second conversion means (1) at said telephone sets for converting said digital signals received by said second conversion means to analogue speech signals, characterised by signal generating means (2) for generating control signals according to a usage rate of said network, said first conversion means (14, 15, 16, 17) being selectively operable in response to said control signals to convert said analogue signals into digital signals having one of at least two bit rates and said control signals being transmitted to said second conversion (14, 15, 16, 17) means to enable said second conversion means to selectively operate at one of said bit rates which is selected according to said usage rate of said telephone network, said first conversion means including at least two circuits (14, 15, 16, 17) each of which is selectively connectable to encode said analogue speech signals to said digital signals but at different bit rates, said control signals selecting the circuit (14, 15, 16, 17) to be utilized.

8. A digital telephone system according to claim 7 wherein the circuit (14, 15, 16, 17) selected is capable of maintaining the bit rate during the course of a call from the associated telephone set.

9. A telephone system according to Claims 7 or 8 wherein the signal generating means includes usage rate detection means whereby the usage rate of the network is detected and when the usage rate exceeds or is less than a predetermined rate or rates the generating means causes the control signals to be generated for transmission to the individual telephone sets.

## Patentansprüche

1. Verfahren zum Wählen der Bitrate einer digitalen Telefonanlage mit individuellen Telefonapparaten (X) mit einem Mittel (1) zum Konvertieren der Sprachsignale in analoge Sprachsignale, einem Mittel (14, 15, 16, 17) zum Konvertieren der genannten analogen Sprachsignale in digitale Signale, die über ein digitales Kommunikationsnetz gesendet werden sollen, und einem Mittel (1) zum Konvertieren der genannten, über das genannte digitale Kommunikationsnetz empfangenen digitalen Signale in analoge Sprachsignale, wobei die Konvertierung zwischen den analogen Sprachsignalen und den digitalen Signalen an den genannten, die genannten Sprachsignale empfangenden individuellen Telefonapparaten (X) erfolgt, dadurch gekennzeichnet, daß in den genannten individuellen Telefonapparaten (X) die analogen Signale in die genannten digitalen Signale mit einer von wenigstens zwei unterschiedlichen Bitraten konvertiert werden, wobei eine der genannten Bitraten eine Standardbitrate und wenigstens eine der anderen Bitraten eine reduzierte Bitrate ist, und daß Steuersignale gemäß einer Belegungsrate des genannten digitalen Kommunikationsnetzes generiert werden und diese Steuersignale eine der genannten wenigstens zwei von den genannten individuellen Telefonapparaten produzierten Bitraten bei der Einleitung eines Anrufs an dem genannten individuellen Telefonapparat wählen können, so daß die genannte Standardbitrate dann gewählt wird, wenn die genannte Belegung des genannten Kommunikationsnetzes unter einem vorbestimmten prozentualen Belegungsanteil liegt, und die genannte wenigstens eine andere reduzierte Bitrate der genannten wenigstens zwei Bitraten nach einem Anstieg der Belegung des genannten Kommunikationsnetzes über den genannten vorbestimmten prozentualen Anteil gewählt wird, um eine solche erhöhte Belegung aufzunehmen.

2. Verfahren nach Anspruch 1, bei dem die gewählte Bitrate während des Verlaufes des genannten Anrufes an dem genannten individuellen Telefonapparat (X) aufrechterhalten werden kann.

3. Verfahren nach Anspruch 1 oder 2, bei dem die Standardbitrate der digitalen Signale 64 kBit/s beträgt und die Bitrate nach Eingang eines oder mehrerer Steuersignale im Falle einer Belegungserhöhung auf 32 kBit/s, 16 kBit/s, 8 kBit/s oder weniger reduziert oder im Falle einer Verringerung der Belegungsrate im Netz von diesen Bitraten erhöht wird.

4. Verfahren nach Anspruch 1, 2 oder 3, bei dem in den Telefonapparaten zwei oder mehr Codierer/Decodierer-Schaltungen vorgesehen sind, die jeweils selektiv aktiviert werden können, um Sprachsignale in digitale Signale zu codieren, aber mit unterschiedlichen Bitraten, wobei die Steuersignale die zu benutzende Codierer/Decodierer-Schaltung wählt.

5. Verfahren nach einem der Ansprüche 1 - 4, bei dem an einem gewählten Telefonapparat (X) Mittel zum Übersteuern der Steuersignale vorgesehen sind, so daß die gewählte Bitrate unabhängig von der Belegungsrate aufrechterhalten wird.

6. Verfahren nach einem der vorhergehenden Ansprüche, bei dem das Steuersignal von einem Netzverwaltungssystem generiert wird, um die Belegung der Telefonanlage in Zeiten mit hoher Belegung zu optimieren.

7. Digitale Telefonanlage, die folgendes umfaßt: Telefonapparate (X) zum Empfangen von Sprachsignalen, um analoge Sprachsignale zu generieren, ein erstes Konvertierungsmittel (1) an den genannten Telefonapparaten zum Konvertieren der genannten analogen Sprachsignale in digitale Signale, ein digitales Kommunikationstelefonnetz, über das die genannten digitalen Signale gesendet werden, und ein zweites Konvertierungsmittel (1) an den genannten Telefonapparaten zum Konvertieren der genannten, von dem zweiten Konvertierungsmittel empfangenen digitalen Signale in analoge Sprachsignale, gekennzeichnet durch ein Signalgenerierungsmittel (2) zum Generieren von Steuersignalen gemäß einer Belegungsrate des genannten Netzes, wobei das genannte erste Konvertierungsmittel (14, 15, 16, 17) selektiv auf die genannten Steuersignale ansprechend betätigt werden kann, um die genannten analogen Signale in digitale Signale mit einer von wenigstens zwei Bitraten zu konvertieren, und wobei die genannten Steuersignale zu dem genannten zweiten Konvertierungsmittel (14, 15, 16, 17) gesendet werden, damit das genannte zweite Konvertierungsmittel selektiv mit einer der genannten Bitraten arbeiten kann, die gemäß der genannten Belegungsrate des genannten Telefonnetzes gewählt wird, wobei das genannte erste Konvertierungsmittel wenigstens zwei Schaltungen (14, 15, 16, 17) aufweist, die jeweils selektiv aktiviert werden können, um die genannten analogen Sprachsignale in die genannten digitalen Signale zu codieren, aber mit unterschiedlichen Bitraten, wobei die genannten Steuersignale die zu benutzende Schaltung (14, 15, 16, 17) wählen.

8. Digitale Telefonanlage nach Anspruch 7, bei der die gewählte Schaltung (14, 15, 16, 17) die Bitrate während des Verlaufs eines Anrufes von dem zugehörigen Telefonapparat aufrechterhalten kann.

9. Telefonanlage nach Anspruch 7 oder 8, bei der das Signalgenerierungsmittel ein Belegungsraten-Erfassungsmittel aufweist, durch das die Belegungsrate des Netzes erfaßt wird, und wenn die Belegungsrate eine oder mehrere vorbestimmte Raten übersteigt oder unter diese abfällt, dann bewirkt das Generierungsmittel eine Generierung der Steuersignale, die an die individuellen Telefonapparate gesendet werden sollen.

## Revendications

1. Procédé de sélection du débit binaire d'un système téléphonique numérique possédant des appareils de téléphone individuels (X) comprenant un moyen (1) pour transformer des signaux de conversation en signaux de conversation analogiques, des moyens (14, 15, 16, 17) pour transformer lesdits signaux de conversation analogiques en signaux numériques à des fins de transmission en passant par un réseau de communications numérique, et un moyen (1) pour transformer lesdits signaux numériques reçus à partir dudit réseau de communications numérique en signaux de conversation analogiques, dans lequel la transformation entre les signaux de conversation analogiques et les signaux numériques a lieu auxdits appareils de téléphone individuels (X) recevant lesdits signaux de conversation, caractérisé en ce que, dans lesdits appareils de téléphone individuels (X), les signaux analogiques sont transformés en signaux numériques en question à un débit binaire parmi au moins deux débits binaires différents, un desdits débits binaires étant un débit binaire normal et au moins un des autres débits binaires étant un débit binaire réduit, et en ce que des signaux de commande sont générés en fonction d'un taux d'utilisation dudit réseau de communication numérique et des signaux de commande de ce type sont capables de sélectionner un des débits binaires en question, au moins au nombre de deux, produits par lesdits appareils de téléphone individuels au début d'un appel audit appareil de téléphone individuel, par lequel ledit débit binaire normal est sélectionné lorsque ladite utilisation dudit réseau de communications est inférieure à un pourcentage prédéterminé d'utilisation et le ou lesdits autres débits binaires réduits des débits binaires en question, au moins au nombre de deux, est ou sont sélectionnés lorsque l'utilisation dudit réseau de communications augmente au-delà dudit pourcentage prédéterminé dans le but de prendre en compte une telle utilisation accrue.

2. Procédé selon la revendication 1, dans lequel le débit binaire sélectionné peut être maintenu au cours dudit appel audit appareil de téléphone individuel (X).

3. Procédé selon la revendication 1 ou 2, dans lequel le débit binaire normal des signaux numériques est de 64 Kbits/sec et, lors de la réception d'un signal ou de signaux de commande, le débit binaire est réduit à 32 Kbits/sec, 16 Kbits/sec, 8 Kbits/sec ou moins lorsqu'une utilisation accrue a lieu, ou bien le débit binaire augmente à partir de ces débits binaires lorsqu'une utilisation réduite du réseau a lieu.

4. Procédé selon la revendication 1, 2 ou 3, dans lequel on prévoit, aux appareils de téléphone, deux circuits CODEC ou plus, chacun de ceux-ci pouvant être connecté de manière sélective, dans le but d'encoder des signaux de conversation, à des signaux numériques, mais à des débits binaires différents, les signaux de commande sélectionnant le circuit CODEC à utiliser.

5. Procédé selon l'une quelconque des revendications 1-4, dans lequel, à un appareil de téléphone sélectionné (X), on prévoit un moyen pour rendre les signaux de commande prioritaires, par lequel le débit binaire sélectionné est maintenu quel que soit le taux d'utilisation.

6. Procédé selon l'une quelconque des revendications précédentes, dans lequel le signal de commande est généré par un système de gestion de réseau pour optimiser l'utilisation du système téléphonique au cours de périodes de forte utilisation.

7. Système téléphonique numérique comprenant des appareils de téléphone (X) pour recevoir des signaux de conversation dans le but de générer des signaux de conversation analogiques, un premier moyen de conversion (1) auxdits appareils de téléphone pour transformer lesdits signaux de conversation analogiques en signaux numériques, un réseau téléphonique de communications numérique par lequel lesdits signaux numériques sont transmis, et un second moyen de transformation (1) auxdits appareils de téléphone pour transformer lesdits signaux numériques reçus par ledit second moyen de transformation en signaux de conversation analogiques, caractérisé par un moyen de génération de signaux (2) pour générer des signaux de commande en fonction d'un taux d'utilisation dudit réseau, lesdits premiers moyens de transformation (14, 15, 16, 17) pouvant être mis en service de manière sélective en réponse auxdits signaux de commande pour transformer lesdits signaux analogiques en signaux numériques possédant un débit binaire parmi au moins deux de ces derniers et lesdits signaux de commande étant transmis auxdits seconds moyens de transformation (14, 15, 16, 17) pour permettre auxdits seconds moyens de transformation d'être mis en service de manière sélective à un desdits débits binaires qui est sélectionné en fonction dudit taux d'utilisation dudit réseau téléphonique, ledit premier moyen de transformation englobant au moins deux circuits (14, 15, 16, 17) dont chacun peut être relié de manière sélective, dans le but d'encoder lesdits signaux de conversation analogiques, auxdits signaux numériques, mais à des débits binaires différents, lesdits signaux de commande sélectionnant le circuit (14, 15, 16, 17) à utiliser.

8. Système téléphonique numérique selon la revendication 7, dans lequel le circuit (14, 15, 16, 17) sélectionné est capable de maintenir le débit binaire pendant la durée d'un appel provenant de l'appareil de téléphone associé.

9. Système téléphonique selon la revendication 7 ou 8, dans lequel le moyen de génération de signaux englobe un moyen de détection du taux d'utilisation, par lequel le taux d'utilisation du réseau est détecté et lorsque le taux d'utilisation dépasse un ou des taux prédéterminés ou bien est inférieur à ce ou à ces derniers, le moyen de génération provoque la génération des signaux de commande à des fins de transmission aux appareils de téléphone individuels.
